(19) Europäisches Patentamt
European Patent Office
Office européen des brevets

(11) Publication number: 0 235 979
B1

# (12) EUROPEAN PATENT SPECIFICATION

(45) Date of publication of the patent specification: 31.05.89

(51) Int. Cl.⁴: A01N 53/00
// (A01N53/00, 43:90)

(21) Application number: 87301178.7

(22) Date of filing: 11.02.87

## (54) Pesticidal formulations.

(30) Priority: 11.02.86 GB 8603383

(43) Date of publication of application: 09.09.87 Bulletin 87/37

(45) Publication of the grant of the patent: 31.05.89 Bulletin 89/22

(84) Designated Contracting States: AT BE CH DE ES FR GB GR IT LI LU NL SE

(56) References cited: EP-A- 0 152 229

(73) Proprietor: THE WELLCOME FOUNDATION LIMITED, 183-193 Euston Road, London NW1 2BP(GB)

(72) Inventor: Irving, Stephen Nicholas, The Wellcome Foundation Limited, 183-193 Euston Road London NW1 2BP(GB)
Inventor: Moss, Matthew David Vere, The Wellcome Foundation Limited, 183-193 Euston Road London NW1 2BP(GB)

(74) Representative: Rollins, Anthony John et al, Group Patents & Agreements The Wellcome Foundation Ltd Langley Court, Beckenham Kent BR3 3BS(GB)

EP 0 235 979 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to pesticidal formulations, their preparation, and their use in the control of pests. More particularly, the invention relates to pesticidal formulations containing a knockdown pyrethroid and a bicyclooctane.

The pyrethroids are a class of synthetic pesticides which exhibit excellent pesticidal properties against a wide range of insect and acarine pests. Cyhalothrin, cypermethrin, deltamethrin, permethrin, the allethrins, the neopynamins, kadethrin, vapothrin are all examples of pyrethroids that have been commercialised. Certain of these pyrethroids have been classified as "knockdown pyrethroids" in that they excite the nervous system of insects extremely rapidly causing hyperactivity and "knockdown" at sub-lethal doses often in a matter of minutes. These effects eventually wear off without killing the insect. Examples of such knockdown pyrethroids include the allethrins, terallethrin, fenfluthrin, the neopynamins, kadethrin and vapothrin. Other pyrethroids, such as cypermethrin, cyhalothrin and deltamethrin at normal use levels do not cause this rapid insect knockdown but exhibit their pesticidal activity by killing the insects over a longer time-scale. Yet further pyrethroids, such as permethrin exhibit both knockdown and kill properties to some extent. It is often beneficial, particularly in the public health area, to combine knockdown and kill pyrethroids so that a rapid onset of activity and kill are readily observable.

Certain bicycloalkanes have been reported to have both herbicidal (U.S. Patent 3 686 224) and pesticidal properties, see J. Agric. Food Chem. 1985, 33, 976 and EP-A 152 229, EP-A 211 598 and EP-A 235 435. The bicycloalkanes do not possess appreciable knockdown activity.

The present invention provides pesticidal formulations comprising a mixture of a knockdown pyrethroid, as hereinafter defined, and a bicycloalkane of the formula (I):

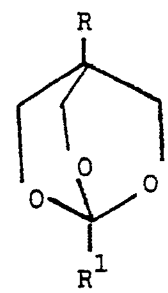

wherein R is $C_{2-10}$ alkyl, alkenyl or alkynyl, each optionally substituted by, or methyl substituted by, cyano, halo, $C_{3-4}$ cycloalkyl or $C_{1-4}$ alkoxy, or a group $S(O)_mR^2$ wherein $R^2$ is $C_{1-4}$ alkyl and m is 0, 1 or 2 or R is $C_{3-10}$ cycloalkyl, $C_{4-10}$ cycloalkenyl or phenyl, each optionally substituted by $C_{1-4}$ alkoxy, $C_{1-3}$ alkyl, $C_{2-4}$ alkynyl, halo, cyano or a group $S(O)_mR^2$ as hereinbefore defined and $R^1$ is phenyl, $C_{5-10}$ cycloalkyl or cycloalkenyl each optionally substituted.

Suitably R is propyl, butyl, pentyl, $C_{2-5}$ alkenyl or alkynyl, $C_{5-7}$ cycloalkyl or phenyl. Most suitably R is n-propyl, i-butyl, sec-butyl, t-butyl, cyclopentyl or cyclohexyl and preferably R is n-propyl, i-butyl, t-butyl or cyclohexyl.

When $R^1$ is a substituted phenyl, $C_{5-10}$ cycloalkyl or cycloalkenyl group, suitable substituents include halo, cyano, azido, nitro, $C_{1-3}$ alkyl or alkoxy optionally substituted by halo or $C_{2-3}$ alkenyl optionally substituted by halo. Suitably when $R^2$ is phenyl it is substituted by up to three substituents which are preferably at the 3-, 4- and/or 5-positions.

Suitably $R^1$ is cyclohexyl, cycloheptyl or phenyl optionally substituted at the 3-, 4- and/or 5-position by halo, cyano, azide or nitro. Most suitably $R^1$ is cyclohexyl or a phenyl group optionally substituted at the 4-position by chlorine, bromine or cyano.

The knockdown pyrethroids used in the formulation of this invention are the allethrins, the neopynamins, terallethrin, fenfluthrin, kadethrin, vapothrin and permethrin. These expressions include the various individual knockdown isomers and mixtures thereof with other isomers of the compounds. Definitions of the structure of the allethrins, the neopynamins, permethrin and kadethrin are to be found in the 7th Edition of The Pesticide Manual published by The British Crop Protection Council. Terallethrin, fenfluthrin and vapothrin are well recognised names for the compounds of the formula:

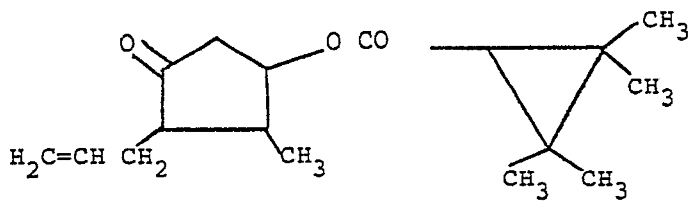

teralethrin

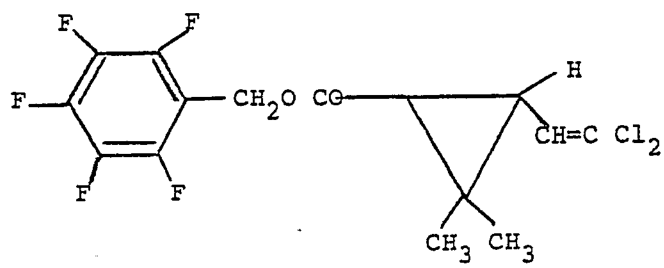

fenfluthrin

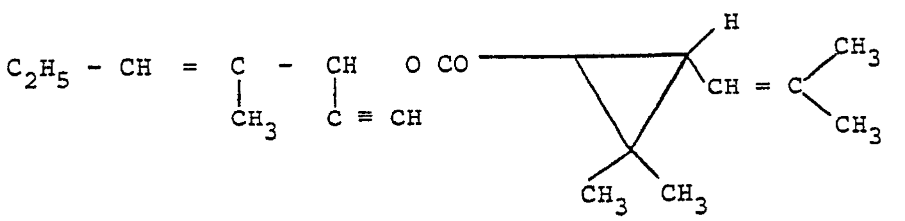

vapothrin

Preferred bicycloalkanes include:
1-(4-chlorophenyl)-4-n-propyl-2,6,7-trioxabicyclo(2.2.2)octane,
1-(4-chlorophenyl)-4-n-butyl-2,6,7-trioxabicyclo(2.2.2)octane,
1-(4-chlorophenyl)-4-s-butyl-2,6,7-trioxabicyclo-(2.2.2)octane,
1-(4-chlorophenyl)-4-t-butyl-2,6,7-trioxabicyclo(2.2.2)octane,
1-(4-chlorophenyl)-4-cyclopentyl-2,6,7-trioxabicyclo(2.2.2)octane,
1-(4-chlorophenyl)-4-cyclohexyl-2,6,7-trioxabicyclo-(2.2.2)octane,
1-(4-chlorophenyl)-4-phenyl-2,6,7-trioxabicyclo(2.2.2)octane,
1-cyclohexyl-4-t-butyl-2,6,7-trioxabicyclo(2.2.2)octane,
1-cycloheptyl-4-t-butyl-2,6,7-trioxabicyclo(2.2.2)octane,
1-(4-fluorophenyl)-4-t-butyl-2,6,7-trioxabicyclo-(2.2.2)octane,
1-(4-bromophenyl)-4-t-butyl-2,6,7-trioxabicyclo(2.2.2)octane,
1-(4-nitrophenyl)-4-t-butyl-2,6,7-trioxabicyclo(2.2.2)octane,
1-(4-cyanophenyl)-4-t-butyl-2,6,7-trioxabicyclo(2.2.2)octane,
1-(3,4-dichlorophenyl)-4-t-butyl-2,6,7-trioxabicyclo(2.2.2)octane,
1-cyclohexyl-4-cyclohexyl-2,6,7-trioxabicyclo(2.2.2)octane,
1-cycloheptyl-4-cyclohexyl-2,6,7-trioxabicyclo-(2.2.2)octane,
1-(4-flouorophenyl)-4-cyclohexyl-2,6,7-trioxabicyclo(2.2.2)octane,
1-(4-bromophenyl)-4-cyclohexyl-2,6,7-trioxabicyclo-(2.2.2)octane,
1-(4-cyanophenyl)-4-cyclohexyl-2,6,7-trioxabicyclo(2.2.2) octane,
(3,4-dichlorophenyl)-4-cyclohexyl-2,6,7-trioxabicyclo (2.2.2)octane.

Suitably, the knockdown pyrethroid is selected from the allethrin series, the neopynamin series, kadethrin or vapothrin. Most suitably the knockdown pyrethroid is s-bioallethrin or permethrin and preferably it is s-bioallethrin.

The ratio of knockdown pyrethroid to bicycloalkane is suitably 100 : 1, to 1 : 100, most suitably 20 : 1 to 1 : 100 and preferably 5 : 1 to l : 50.

It has been found that by combining a bicycloalkane with a knockdown pyrethroid potentiation of the speed of knockdown and kill occurs relative to the speed of knockdown and kill of the individual components. It has been found that the activity of the pesticidal compositions of the present invention may be enhanced by the addition of a synergist or potentiator, for example one : of the oxidase inhibitor class of synergists, such as piperonyl butoxide or 2-propynylphenylphosphonate. When an oxidase inhibitor is present in a pesticidal formulation of the present invention, the ratio of synergist to the combination of knockdown pyrethroid and bicycloalkane is in the range 25 : 1 to 1 : 25 e.g. about 10: 1.

Further pyrethroids, either knockdown or kill pyrethroids or further bicycloalkanes may also be included in the pesticidal formulations of the present invention as may be other pesticides (for example carbamates and organophosphates, benzyl ureas, avermectins and pyrethrins) and/or attractants and/or fungicides and/or antibiotics.

The pesticidal formulations of the present invention may be used to control arthropods such as insect and acarine pests.

These pesticidal formulations may be used for such purposes by application of the active components themselves or as compositions in diluted form. The precise nature of the formulation will normally depend on the nature of the compound and the pest to be controlled. Thus the formulations can be applied as a dip, spray, lacquer, foam, dust, powder, aqueous suspension, paste, gel, shampoo, grease, combustible solid, vapour emanator, wettable powder, granule, aerosol, microcapsule, emulsifiable concentrate, oil suspensions, oil solutions, pressure-pack, impregnated article or pour on formulation. Dip concentrates are not applied per se, but diluted with water and the animals immersed in a dipping bath containing the dip wash. Sprays may be applied by hand or by means of a spray race or arch. The animal, plant or surface being treated may be saturated with the spray by means of high volume application or superficially coated with the spray by means of light or ultra low volume application. Aqueous suspensions may be applied in the same manner as sprays or dips. Dusts may be distributed by means of a powder applicator or, in the case of animals, incorporated in perforated bags attached to trees or rubbing bars. Pastes, shampoos and greases may be applied manually or distributed over the surface of an inert material against which animals rub and transfer the material to their skins. Pour-on formulations are dispensed as a unit of liquid of small volume on to the backs of animals such that all or most of the liquid is retained on the animals. Vapour emanators dispense the mixture of compounds into the immediate atmosphere as vapour or as small particles.

The pesticidal compositions may be ready for use on the animals, plants or surface or may require dilution prior to application, but both types of composition comprise a mixture of pyrethroid and a bicycloalkane, as hereinbefore defined,in intimate admixture with one or more carriers or diluents. The carriers may be liquid, solid or gaseous or comprise mixtures of such substances, and the mixture of knockdown pyrethroid and bicycloalkane may be present in a concentration of from 0.025 to 99% w/v depending upon whether the composition requires further dilution.

Dusts and powder compositions comprise the mixture of knockdown pyrethroid and bicycloalkane in intimate admixture with a powdered solid inert carrier for example suitable clays, kaolin, talc, mica, chalk, gypsum, vegetable carriers, starch and diatomaceous earths.

Granules comprise the mixture of knockdown pyrethroid and bicyclooctane absorbed into a kieselguhr porous granular material (e.g. pumice) or onto plastics materials for a controlled release formulation.

Spray compositions may comprise a solution in an organic solvent (e.g. those listed below) or an emulsion in water (dip wash or spray wash) prepared in the field from an emulsifiable concentrate (otherwise known as a water miscible oil) which may also be used for dipping purposes. The concentrate preferably comprises a mixture of the active ingredients, with or without an organic solvent and one or more emulsifiers. Solvents may be present within wide limits but preferably in an amount of from 0 to 90% w/v of the composition and may be selected from kerosene, ketones, alcohols, xylene, aromatic naphtha, and other solvents known in the formulating art. The concentration of emulsifiers may be varied within wide limits but is preferably in the range of 5 to 25% w/v and the emulsifiers are conveniently non-ionic surface active agents including polyoxyalkylene esters of alkyl phenols and polyoxyethylene derivatives of hexitol anhydrides and anionic surface active agents including Na lauryl sulphate, fatty alcohol ether sulphates, Na and Ca salts of alkyl aryl sulphonates and alkyl sulphosuccinates but may also be cationic or amphoteric surface active agents.

Wettable powders comprise an inert solid carrier, one or more surface active agents, and optionally stabilisers and/or anti-oxidants.

Emulsifiable concentrates comprise emulsifying agents, and often an organic solvent, such as kerosene, ketones, alcohols, xylenes, aromatic naphtha, and other solvents known in the art.

Wettable powders and emulsifiable concentrates will normally contain from 5 to 95% by weight of the active ingredients, and are diluted, for example with water, before use.

Lacquers comprise a solution of the active ingredients in an organic solvent, together with a resin, and optionally a plasticiser.

Dip washes may be prepared not only from emulsifiable concentrates but also from wettable powders, soap based dips and aqueous suspensions comprising a mixture of knockdown pyrethroid and bicycloalkane in intimate admixture with a dispersing agent and one or more surface active agents.

Aqueous suspensions may comprise a suspension in water together with suspending, stabilizing or other agents. The suspensions or solutions may be applied per se or in a diluted form in known fashion. Liquid formulations may be obtained by dissolving a mixture of knockdown pyrethroid and bicyclooctane

in a suitable solvent (aliphatic, aromatic or polar).

Greases (or ointments) may be prepared from vegetable oils, synthetic esters of fatty acids or wool fat together with an inert base such as soft paraffin. The mixture of knockdown pyrethroid and bicycloalkane is preferably distributed uniformly through the mixture in solution or suspension. Greases may also be made from emulsifiable concentrates by diluting them with an ointment base.

Pastes and shampoos are also semi-solid preparations in which the mixture of knockdown pyrethroid and bicycloalkane may be present as an uniform dispersion in a suitable base such as soft or liquid paraffin or made on a non-greasy basis with glycerin, mucilage or a suitable soap. As greases, shampoos and pastes are usually applied without further dilution they should contain the appropriate percentage active ingredients required for treatment.

Aerosol sprays may be prepared as a simple solution of the active ingredient in the aerosol propellant and co-solvent such as halogenated alkanes and the solvents referred to above, respectively. Pour-on formulations may be made as a solution or suspension the mixture of knockdown pyrethroid and bicycloalkane in a liquid medium. An avian or mammal host may also be protected against infestation of acarine ectoparasites by means of carrying a suitably-moulded, shaped plastics article impregnated with a mixture of knockdown pyrethroid and bicycloalkane. Such articles include impregnated collars, tags, bands, sheets and strips suitably attached to appropriate parts of the body. Suitably the plastics material is a polyvinyl chloride (PVC).

The concentration of the mixture of knockdown pyrethroid and bicycloalkane to be applied to an animal will vary according to the compound chosen, the interval between treatments, the nature of the formulation and the likely infestation, but in general 0.001 to 20.0% w/v and preferably 0.01 to 10% of the active ingredients should be present in the applied formulation. The amount of active ingredients compound deposited on an animal will vary according to the method of application, size of the animal, concentration of the active ingredients in the applied formulation, factor by which the formulation is diluted and the nature of the formulation but in general will lie in the range of from 0.0001% to 0.5% except for undiluted compositions such as pour-on compositions which in general will be deposited at a concentration in the range from 0.1 to 20.0% and preferably 0.1 to 10%.

The pesticidal formulations are also of use in the protection and treatment of plant species, in which case an effective insecticidal or acaricidal amount of the active ingredient is applied. The application rate will vary according to the pesticidal formulations chosen, the nature of the composition the mode of application, the plant species, the planting density and likely infestation and other like factors but in general, a suitable use rate for agricultural crops is in the range 0.001 to 3Kg/Ha and preferably between 0.01 and 1g/Ha. Typical compositions for agricultural use contain between 0.0001% and 50% and conveniently betwee 0.1 and 15% by weight of a mixture of knockdown pyrethroid and bicycloalkane.

Particular crops include cotton, wheat, maize, rice, sorghum, soya, vines, tomatoes, potatoes, fruit trees and spruce.

Dusts, greases, pastes and aerosol compositions are usually applied in a random fashion as described above and concentrations of 0.001 to 20% w/v of active ingredients in the applied compositions may be used.

The pesticidal formulations of the present invention are useful in the control of arthropods e.g. insects and acarines in any environment where these constitute pests, e.g. in agriculture, in animal husbandry, in public health control and in domestic situations.

Insect pests include members of the orders Coleoptera (e.g. Anobium, Tribolium, Sitophilus, Diabrotica, Anthonomus or Anthrenus spp.), Lepidoptera (e.g. Ephestia, Plutella, Chilo, Heliothis, Spodoptera or Tineola spp.), Diptera (e.g. Musca, Aedes, Culex, Glossina, Stomoxys, Haematobia, Tabanus, Hydrotaea, Lucilia, Chrysomia, Callitroga, Dermatobia, Hypoderma, Liriomyza and Melophagus spp.), Phthiraptera (Malophaga e.g. Damalina spp. and Anoplura e.g. Linognathus and Haematopinus spp.), Hemiptera (e.g. Aphis, Bemisia, Aleurodes, Nilopavata, Nephrotetix or Cimex spp.), Orthoptera (e.g. Schistocerca or Acheta spp.), Dictyoptera (e.g. Blattella, Periplaneta or Blatta spp.), Hymenoptera (e.g. Solenopsis or Monomorium spp.), Isoptera (e.g. Reticulitermes spp.), Siphonaptera (e.g. Ctenocephalides or Pulex spp.), Thysanura (e.g. Lepisma spp.), Dermaptera (e.g. Forficula spp.) and Pscoptera (e.g. Peripsocus spp.).

Acarine pests include ticks, e.g. members of the genera Boophilus, Rhipicephalus, Amblyomma, Hyalomma, Ixodes, Haemaphysalis, Dermocentor and Anocentor, and mites and manges such as Tetranychus, Psoroptes, Panonychus, Psorergates, Chorioptes and Demodex spp.

Examples of Potentiation between Representative Knockdown Pyrethroids and Bicycloalkanes.

Representative bicycloalkanes and sub-lethal doses of knockdown pyrethroids (as hereinbefore defined) were combined and applied topically to batches of 20 female Muscadomestica in 0.3 µ 1 cellusolve or butanone in the normal manner. Assessments were made at 10 mins, 1 hour and 1 day. The results were as follows :

| Active Ingredients | Rate | Mortality Response | | |
|---|---|---|---|---|
| | | 10 min | 1 hour | 1 day |
| 1-(4-bromophenyl)-4-t-butyl-2,6,7-trioxabicyclooctane (compound 1 alone) | 0.1 µg | 0 | 0 | 68 |
| compound 1 + S-bioallethrin | 0.1 + 0.03 µg | 15 | 90 | 90 |
| Compound 1 alone | 0.3 µg | 0 | 0 | 100 |
| compound 1 + S-bioallethrin | 0.3 + 0.03 µg | 100 | 100 | 100 |
| Compound 1 alone | 0.9 g | 29 | 92 | 100 |
| compound 1 + S-bioallethrin | 0.9 + 0.03 µg | 100 | 100 | 100 |
| S-bioallethrin alone | 0.03 µg | 0 | 10 | 15 |
| 4-t-butyl-1-cyclohexyl-2,6,7-trioxabicyclooctane (compound 2) alone | 0.6 µg | 10 | 45 | 50 |
| | 2.0 µg | 25 | 85 | 100 |
| permethrin alone | 0.005 µg | 5 | 14 | 5 |
| | 0.015 µg | 10 | 65 | 55 |
| | 0.05 µg | 70 | 100 | 100 |
| compound 2 + permethrin | 0.1 + 0.0025 µg | 0 | 35 | 0 |
| | 0.3 + 0.0075 µg | 10 | 65 | 55 |
| | 0.5 + 0.0125 µg | 75 | 100 | 85 |

Formulations

All quantities are expressed as percentages on a weight to weight basis.

1. Emulsifiable Concentrate

| | |
|---|---|
| Compound of formula (I) + knockdown pyrethroid to value of | 10.00 |
| Ethylan KEO | 20.00 |
| Xylene | 67.50 |
| Butylated Hydroxyanisole | 2.50 |
| | 100.00 |

2. Wettable Powder

| | |
|---|---|
| Compound of formula (I) + knockdown pyrethroid to value of | 25.0 |
| Attapuigite | 69.50 |
| Sodium isopropylbenzene sulphonate | 0.50 |
| Sodium salt of condensed naphthalene sulphonic acid | 2.50 |
| Butylated hydroxytoluene | 2.50 |
| | 100.00 |

3. Dust

| | |
|---|---|
| Compound of formula (I) + knockdown pyrethroid to value of | 0.50 |
| Butylated Hydroxyanisole | 0.10 |
| Talc | 99.40 |
| | 100.00 |

4. Bait

| | |
|---|---|
| Compound of formula (I) + knockdown pyrethroid to value of | 40.25 |
| Icing Sugar | 59.65 |
| Butylated hydroxy toluene | 0.10 |
| | 100.00 |

5. Lacquer

| | |
|---|---|
| Compound of formula (I) + knockdown pyrethroid to value of | 2.5 |
| Resin | 5.0 |
| Butylated Hydroxy anisole | 0.5 |
| High aromatic white spirit | 92.0 |
| | 100.00 |

| 6. Aerosol | |
|---|---|
| Compound of formula (I) + knockdown pyrethroid to value of | 0.30 |
| Butylated Hydroxy anisole | 0.10 |
| 1,1,1-trichloroethane | 4.00 |
| Odourless Kerosene | 15.60 |
| Arcton 11/12. 50:50 mix | 80.00 |
| | 100.00 |

| 7. Spray | |
|---|---|
| Compound of formula (I) + knockdown pyrethroid to value of | 0.1 |
| Butylated Hydroxy anisole | 0.1 |
| Xylene | 10.0 |
| Odourless Kerosene | 89.8 |
| | 100.00 |

| 8. Potentiated Spray | |
|---|---|
| Compound of formula (I) + knockdown pyrethroid to value of | 0.1 |
| Piperonyl Butoxide | 0.5 |
| Butylated Hydroxy anisole | 0.1 |
| Xylene | 10.1 |
| Odourless Kerosene | 89.2 |
| | 100.00 |

## Claims

1. A pesticidal formulation comprising a mixture of a knockdown pyrethroid, which is an allethrin, a neopynamin, terallethrin, fenfluthrin, kadethrin, vapothrin or permethrin and a bicycloalkane of the formula (I):

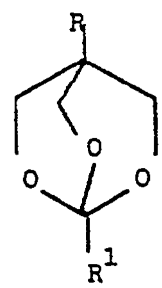

wherein R is $C_{2-10}$ alkyl, alkenyl or alkynyl, each optionally substituted by, or methyl substituted by, cyano, halo, $C_{3-4}$ cycloalkyl or $C_{1-4}$ alkoxy, or a group $S(O)_mR^2$ wherein $R^2$ is $C_{1-4}$ alkyl and m is 0, 1 or 2 or R is $C_{3-10}$ cycloalkenyl or phenyl, each is optionally substituted by $C_{1-4}$ alkoxy, $C_{1-3}$ alkyl, $C_{2-4}$ alkynyl, halo, cyano or a group $S(O)_mR^2$ as hereinbefore defined and $R^1$ is phenyl, $C_{5-10}$ cycloalkyl, $C_{5-10}$ cycloalkenyl, each optionally substituted.

2. A pesticidal formulation according to claim 1 wherein the knockdown pyrethroid is selected from the allethrins, the neopynamins, Kadethrin, vapothrin or permethrin.

3. A pesticidal formulation according to claim 1 wherein the knockdown pyrethroid is S-bioallethrin or permethrin.

4. A pesticidal formulation according to any one of claims 1 to 3 wherein R is selected from propyl, butyl, pentyl, $C_{2-5}$ alkenyl or alkynyl, $C_{5-7}$ cycloalkyl or phenyl and $R^1$ is selected from cyclohexyl, cycloheptyl or phenyl optionally substituted at the 3-, 4- and/or 5-position by halo, cyano, azido or nitro.

5. A pesticidal formulation according to any one of claims 1 to 4 which also contains a synergist.

6. A pesticidal formulation according to any one of claims 1 to 5 which also contains further pyrethroids and/or further bicyclooctanes and/or other pesticides and/or attractants and/or fungicides and/or antibiotics.

7. A pesticidal formulation according to any one of claims 1 to 6 which also contains a diluent or carrier.

8. A method of controlling arthropods which comprises the administration of an effective amount of pesticidal formulation according to any one of claims 1 to 7 to the arthropod or its environment.

9. A method of controlling arthropod infestation of plants which comprises the application of an insecticidal or acaricidal amount of a pesticidal formulation according to any one of claims 1 to 7 to the plant or its environment.

10. A method for the preparation of a pesticidal formulation according to claim 1, which comprises the admixture of a knockdown pyrethroid and a bicyclooctane of the formula (I).

**Patentansprüche**

1. Pestizide Formulierung, enthaltend eine Mischung aus einem Betäubungspyrethroid, das ein Allethrin, ein Neopynamin, Terallethrin, Fenfluthrin, Kadethrin, Vapothrin oder Permethrin ist und einem Bicycloalkan der Formel (I):

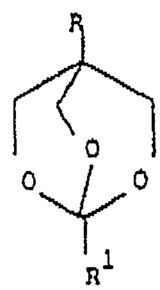

worin R $C_{2-10}$ Alkyl, Alkenyl oder Alkinyl, jeder Rest gegebenenfalls substituiert durch, oder Methyl gegebenenfalls substituiert durch Cyano, Halogen, $C_{3-4}$ Cycloalkyl oder $C_{1-4}$ Alkoxy, oder eine Gruppe $S(O)_mR^2$ ist, worin $R^2$ $C_{1-4}$ Alkyl und m 0, 1 oder 2 ist, oder R ist $C_{3-10}$ Cycloalkyl, $C_{4-10}$ Cycloalkenyl oder Phenyl, wobei jeder Rest gegebenenfalls durch $C_{1-4}$ Alkoxy, $C_{1-3}$ Alkyl, $C_{2-4}$ Alkinyl, Halogen, Cyano oder eine Gruppe $S(O)_mR^2$, wie vorstehend definiert, substituiert ist und $R^1$ Phenyl, $C_{5-10}$ Cycloalkyl, $C_{5-10}$ Cycloalkenyl, jeder Rest gegebenenfalls substituiert, ist.

2. Pestizide Formulierung nach Anspruch 1, worin das Betäubungspyrethroid ausgewählt ist aus Allethrinen, den Neopynaminen, Kadethrin, Vapothrin oder Permethrin.

3. Pestizide Formulierung nach Anspruch 1, worin das Betäubungspyrethroid S-Bioallethrin oder Permethrin ist.

4. Pestizide Formulierung nach einem der Ansprüche 1 bis 3, worin R aus Propyl, Butyl, Pentyl, $C_{2-5}$ Alkenyl oder Alkinyl, $C_{5-7}$ Cycloalkyl oder Phenyl ausgewählt ist und $R^1$ aus Cyclohexyl, Cycloheptyl oder Phenyl gegebenenfalls in der 3-, 4- und/oder 5-Stellung durch Halogen, Cyano, Azido, Nitro substituiert, ausgewählt ist.

5. Pestizide Formulierung nach einem der Ansprüche 1 bis 4, die auch einen Synergisten enthält.

6. Pestizide Formulierung nach einem der Ansprüche 1 bis 5, die auch weitere Pyrethroide und/oder weitere Bicyclooktane und/oder andere Pestizide und/oder Anlockungsmittel und/oder Fungizide und/oder Antibiotika enthält.

7. Pestizide Formulierung nach einem der Ansprüche 1 bis 6, die auch ein Verdünnungsmittel oder einen Trägerstoff enthält.

8. Verfahren zur Bekämpfung von Arthropoden, bei dem man eine wirksame Menge einer pestiziden Formulierung nach einem der Ansprüche 1 bis 7 auf die Arthropoden oder ihre Umgebung aufbringt.

9. Verfahren zur Bekämpfung des Arthropodenbefalls von Pflanzen, bei dem man eine insektizide oder acarizide Menge einer pestiziden Formulierung nach einem der Ansprüche 1 bis 7 auf die Pflanze oder ihre Umgebung aufbringt.

10. Verfahren zur Herstellung einer pestiziden Formulierung nach Anspruch 1, bei dem man ein Betäubungspyrethroid und ein Bicyclooktan der Formel (I) vermischt.

## Revendications

1. Composition pesticide comprenant un mélange d'un pyréthroïde d'étourdissement qui est une alléthrine, une néopynamine, la teralléthrine, la fenfluthrine, la kadéthrine, la vapothrine ou la perméthrine, et un bicycloalcane de formule (I):

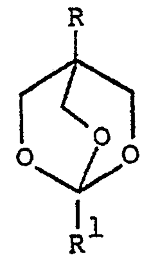

où R représente $C_{2-10}$ alcoyle, alcényle ou alcynyle, chacun éventuellement substitué par, ou substitué en méthyle par, cyano, halo, $C_{3-4}$ cycloalcoyle ou $C_{1-4}$ alcoxy, ou un radical $S(O)_mR^2$ représente $C_{1-4}$ alcoyle et m représente 0, 1 ou 2, ou bien R représente $C_{3-10}$ cycloalcoyle, $C_{4-10}$ cycloalcényle ou phényle, chacun éventuellement substitué par $C_{1-4}$ alcoxy, $C_{1-3}$ alcoyle, $C_{2-4}$ alcynyle, halo, cyano ou un radical $S(O)_mR^2$ tel que défini ci-dessus, et $R^1$ représente phényle, $C_{5-10}$ cycloalcoyle ou cycloalcényle, chacun éventuellement substitué.

2. Composition pesticide suivant la revendication 1, dans laquelle le pyréthroïde d'étourdissement est choisi parmi les alléthrines, les néopynamines, la kadéthrine, la vapothrine et la perméthrine.

3. Composition pesticide suivant la revendication 1, dans laquelle le pyréthroïde d'étourdissement est la S-bioalléthrine ou la perméthrine.

4. Composition pesticide suivant l'une quelconque des revendications 1 à 3, dans laquelle R est choisi parmi propyle, butyle, pentyle, $C_{2-5}$ alcényle ou alcynyle, $C_{5-7}$ cycloalcoyle et phényle et $R^1$ est choisi parmi cyclohexyle, cycloheptyle et phényle éventuellement substitué aux positions 3, 4 et/ou 5 par halo, cyano, azido ou nitro.

5. Composition pesticide suivant l'une quelconque des revendications 1 à 4, qui contient aussi un agent de synergie.

6. Composition pesticide suivant l'une quelconque des revendications 1 à 5, qui contient aussi d'autres pyréthroïdes et/ou d'autres bicyclooctanes et/ou d'autres pesticides et/ou des attractifs et/ou des fongicides et/ou des antibiotiques.

7. Composition pesticide suivant l'une quelconque des revendications 1 à 6, qui contient aussi un diluant ou excipient.

8. Procédé pour lutter contre les arthropodes, qui comprend l'administration d'une quantité efficace d'une composition pesticide suivant l'une quelconque des revendications 1 à 7 sur l'arthropode ou son environnement.

9. Procédé pour lutter contre l'infestation des plantes par les arthropodes, qui comprend l'application d'une quantité insecticide ou acaricide d'une composition pesticide suivant l'une quelconque des revendications 1 à 7 sur la plante ou son environnement.

10. Procédé de préparation d'une composition pesticide suivant la revendication 1, qui comprend le mélange d'un pyréthroïde d'étourdissement avec un bicyclooctane de formule (I).